# EUROPEAN PATENT APPLICATION

(11) **EP 3 511 155 A1**
(43) Date of publication of application: **17.07.2019**
(21) Application number: 18151399.5
(22) Date of filing: 12.01.2018
(51) Int. Cl.: B29C 70/88, B33Y 10/00, B29C 64/118

(54) **APPARATUS AND METHOD FOR ADDITIVE MANUFACTURING**

(71) Applicant: Technische Universität Graz, 8010 Graz (AT)
(72) Inventor: Lienhart, Werner, 8043 Graz (AT); Monsberger, Christoph, 8010 Graz (AT); Friessnig, Matthias, 8010 Graz (AT)
(74) Representative: KLIMENT & HENHAPEL

(57) **Abstract**

Apparatus (1) for additive manufacturing, comprising at least one material filament (2) and feeding means, particularly at least one spool (4), for the at least one material filament (2), wherein the apparatus (1) is designed for producing at least a section of a workpiece (7) by fusing the at least one material filament (2) and forming a layer (10) of the fused material of the at least one material filament (2) by depositing the at least one fused material filament (3). According to the invention an optical fibre (5) and feeding means, particularly a spool (6), for the optical fibre (5) are provided, wherein the optical fibre (5) is separate from the at least one material filament (2) and from the at least one fused material filament (3), and wherein the apparatus (1) is designed for depositing and embedding the optical fibre (5) into the layer (10) of the fused material of the at least one material filament (2).

## Description

### FIELD OF THE INVENTION

The present invention relates to an apparatus for additive manufacturing, comprising at least one material filament and feeding means, particularly at least one spool, for the at least one material filament, wherein the apparatus is designed for producing at least a section of a workpiece by fusing the at least one material filament and forming a layer of the fused material of the at least one material filament by depositing the at least one fused material filament.

Furthermore, the present invention relates to a method for producing a workpiece with an integrated optical fibre.

### STATE OF THE ART

Additive manufacturing is a technique also known as 3D printing and particularly comprises fused filament fabrication, fused deposition modelling, and fused layer modelling/manufacturing. Today, additive manufacturing is used across a broad spectrum of industries, including the production of automotive, aerospace, dental, discrete, high tech, and medical products, particularly for prototyping purposes.

Since the load resistance of workpieces produced by additive manufacturing is typically rather limited, there is an interest in monitoring the material properties of so-produced workpieces in particular. Thereby, a sensor, like e.g. a strain gauge, is mounted, particularly glued, onto the surface of the respective workpiece, usually. This implies, however, several disadvantages and problems, respectively. For example, the mounting has to be of utmost reliability, but should not alter the material properties, which is not trivial to achieve. Moreover, information on material properties inside the workpiece can hardly be gained. Furthermore, obtaining the information on the material properties happens rather long after the production process, which makes an adaption of the production process in dependence on the measured material properties rather cumbersome.

Last not least it must not be forgotten that costs are always an issue.

### OBJECTIVE OF THE INVENTION

Hence, it is an objective of the present invention to provide an apparatus and a method for additive manufacturing that allow for overcoming the above-mentioned problems. In particular, it should be possible to determine the material properties of workpieces produced using the apparatus / method according to the present invention easily and reliably, while keeping costs low.

### SUMMARY OF THE INVENTION

In order to achieve the above-mentioned objective, in an apparatus for additive manufacturing, comprising at least one material filament and feeding means, particularly at least one spool, for the at least one material filament, wherein the apparatus is designed for producing at least a section of a workpiece by fusing the at least one material filament and forming a layer of the fused material of the at least one material filament by depositing the at least one fused material filament, according to the present invention it is provided that an optical fibre and feeding means, particularly a spool, for the optical fibre are provided, wherein the optical fibre is separate from the at least one material filament and from the at least one fused material filament, and wherein the apparatus is designed for depositing and embedding the optical fibre into the layer of the fused material of the at least one material filament.

It is to be understood that here and in the following additive manufacturing / 3D printing particularly comprises fused filament fabrication, fused deposition modelling, and fused layer modelling/manufacturing, as already stated above.

The at least one material filament can be made of plastic.

Several, e.g. two, three or more material filaments can be provided, for example with different colours.

Fusing and depositing of the at least one material filament is done in a known manner, e.g. by means of a head with integrated heating means for melting/fusing the at least one material filament and with at least one nozzle for extruding the at least one fused material filament. By said extrusion the layer is formed, which layer constitutes the section of the workpiece. Naturally, several layers can be laid upon each other to form a bigger section of the workpiece or the whole workpiece.

For the sake of completeness it is noted that the "fused material of the at least one material filament" could be referred to as "material of the at least one fused material filament".

It is clear that the layer(s) of the fused material of the at least one material filament do(es) not stay in a molten state forever, but curing occurs rapidly during cooling down and the layer(s) become(s) solid, forming at least a solid section of the workpiece.

The optical fibre can be a standard optical communication fibre or a special sensing fibre. In any case does the optical fibre enable optical sensing. Optical sensing using the optical fibre has the advantage that many different parameters of the layer(s) / the section of the workpiece, which surround(s) the optical fibre, can be determined optically, namely geometric (cf. e.g. US 20080002187 A1), physical (cf. e.g. US 20050207752 A1), and chemical quantities (cf. e.g. X.-D. Wang and O.S. Wolfbeis: "Fiber-Optic Chemical Sensors and Biosensors (2013-2015)", Anal. Chem., 2016, 88 (1), pp 203-227). Among the determinable geometric quantities are the length of the optical fibre, and particularly length changes or the strain induced in the optical fibre due to length changes or strain in the layer or section of the workpiece, into which the optical fibre is embedded. It has to be noted that also 3D shape sensing is at least in principle possible by measuring the internal strain of the optical fibre (cf. e.g. US 2008212082 A1).

Among the determinable physical quantities of the layer(s) / the section of the workpiece surrounding the optical fibre are the temperature, temperature changes, the pressure, vibrations, electromagnetic fields, and acoustic emissions.

Among the determinable chemical quantities of the layer(s) / the section of the workpiece surrounding the optical fibre are the pH-value and the occurrence or abundance of specific elements/molecules/ions.

Many measurement locations can be realised with one single optical fibre, which is a particular advantage over electric sensors. This means that the above-mentioned quantities can be determined along the optical fibre - in a point wise, in a distributed or in a quasi-distributed way. This means that the spatially resolved information about the material properties of the layer(s) / the section of the workpiece can be obtained.

For example, standard optical communication fibres can be used for distributed temperature or strain sensing based on Rayleigh, Raman or Brillouin backscatter signals in a known manner. Point wise measurement systems are usually based on intensity or interferometric phase measurements. In order to generate high signal intensities, mirrors can be inscribed along the optical fibre or at the end of it. Quasi-distributed systems are for instance fibre Bragg grating (FBG) systems. Discrete FBGs with specific wavelengths are inscribed at various measurement locations along the optical fibre. If the environment at the location of one FBG changes, the reflected wavelength of this pattern also changes.

Since the optical fibre is separate from the at least one material filament and from the at least one fused material filament, the apparatus according to the present invention can be realised easily and cost-effectively. A known printing head with at least one nozzle for the at least one material filament can be simply modified in that only an additional - preferably unheated - nozzle for the optical fibre ("optical fibre nozzle") is further implemented.

Alternatively, an additional printing head - in addition to the printing head with the at least one nozzle for the at least one material filament - can be provided, which comprises the optical fibre nozzle and which can be controlled independently and/or separately, thereby increasing flexibility. Hence, in this case several - at least two - printing heads are provided, which has the additional advantage of allowing for different relative positions and/or different relative orientations of the feeding means with respect to each other and/or to each printing head. Accordingly, the printing heads can be spaced with respect to each other in a first direction and/or in a second direction and/or in a third direction, with the first direction, the second direction and the third direction being mutually normal to each other. This implies that the printing heads can be arranged at different distances from the (section of the) workpiece and/or from a stage, where the (section of the) workpiece is arranged on, with said distances being measured in the first direction and/or in the second direction and/or in the third direction. Preferably, said distances can be varied, and more preferably the position of each printing head can be changed or varied in all three directions.

The optical fibre is then deposited by means of the respective printing head and the optical fibre nozzle in a completely analogue way as the fused material filament by means of the respective printing head and the respective nozzle, which causes an embedding of the optical fibre into the layer of the fused material of the at least one material filament if said fused material is still in the molten state. Once the optical fibre is embedded in the layer, the optical fibre is contacting the material of the layer - but not before, which guarantees unaltered measurements of parameters, e.g. of chemical parameters, of the layer.

The latter would not be the case if the optical fibre were contacting - or even cladded by - the at least one material filament or the fused material filament. Naturally, the same holds for any other cladding of the optical fibre. Accordingly, the term "optical fibre" is to be understood as the optical fibre as such and without any cladding.

The optical fibre can be fed to the optical fibre nozzle simply by means of a spool or any other known suitable means.

As mentioned, in order to ensure that the optical fibre becomes indeed embedded into the layer formed by depositing the at least one fused material filament, the material of said layer has to be still in the molten state when the optical fibre is deposited (into the layer). Since curing occurs rapidly, the optical fibre has thus to be deposited within a short time period after depositing the at least one fused material filament. In order to guarantee that the layer material is still in the molten state and embedding of the optical fibre works, in a preferred embodiment of the apparatus according to the present invention, it is provided that the apparatus is designed for simultaneously depositing the optical fibre and the at least one fused material filament. Hence, the mentioned time period is set to zero, substantially, and the optical fibre is reliably embedded in the course of its deposition.

In a preferred embodiment of the apparatus according to the present invention, it is provided that at least one strengthening filament and feeding means, particularly at least one spool, for at least one strengthening filament are provided, wherein the at least one strengthening filament is separate from the at least one material filament and from the at least one fused material filament, and wherein the apparatus is designed for embedding the at least one strengthening filament into the layer of the fused material of the at least one material filament. By means of the strengthening filament the mechanical strength/stability of the workpiece and its section, respectively, can be greatly improved. The strengthening filament can be made of e.g. aramid fibres, carbon fibres, fibreglass, or of a metal wire. Since the strengthening filament is separate from the at least one material filament and from the at least one fused material filament, said embodiment of the apparatus according to the present invention can be realised easily and cost-effectively. Only a further - preferably unheated - nozzle for the strengthening filament ("strengthening filament nozzle") needs to be implemented in the printing head.

Alternatively, an additional printing head can be provided, which comprises the strengthening filament nozzle and which can be controlled independently and/or separately, thereby increasing flexibility. Hence, in this case several - at least two, preferably at least three - printing heads are provided, which has the additional advantage of allowing for different relative positions and/or different relative orientations of the feeding means with respect to each other and/or to each printing head. Accordingly, the printing heads can be spaced with respect to each other in the first direction and/or in the second direction and/or in the third direction. This implies that the printing heads can be arranged at different distances from the (section of the) workpiece and/or from the stage, where the (section of the) workpiece is arranged on, with said distances being measured in the first direction and/or in the second direction and/or in the third direction. Preferably, said distances can be varied, and more preferably the position of each printing head can be changed or varied in all three directions.

The strengthening filament is then deposited by means of the respective printing head and the strengthening filament nozzle in a completely analogue way as the fused material filament by means of the respective printing head and the respective nozzle, which causes an embedding of the strengthening filament into the layer of the fused material of the at least one material filament if said fused material is still in the molten state. Once the strengthening filament is embedded in the layer, the strengthening filament is contacting the material of the layer, but not before.

The strengthening filament can be fed to the strengthening filament nozzle simply by means of a spool or any other known suitable means.

Preferably, the at least one strengthening filament is also separate from the optical fibre.

In order to ensure that the strengthening filament becomes indeed embedded into the layer formed by depositing the at least one fused material filament, the material of said layer has to be still in the molten state when the strengthening filament is deposited (into the layer). Since curing occurs rapidly, the strengthening filament has thus to be deposited within a short time period after depositing the at least one fused material filament. In order to guarantee that the layer material is still in the molten state and embedding of the strengthening filament works, in a preferred embodiment of the apparatus according to the present invention, it is provided that the apparatus is designed for simultaneously depositing the at least one strengthening filament and the at least one fused material filament. Hence, the mentioned time period is set to zero, substantially, and the strengthening filament is reliably embedded in the course of its deposition.

In a preferred embodiment of the apparatus according to the present invention, it is provided that an analysis unit is provided, which analysis unit is connected to the optical fibre for determining quality parameters of the layer, particularly after curing of the fused material of the at least one material filament, by means of optical measurements.

The quality parameters particularly are the above-mentioned geometrical, physical and chemical quantities that can be determined by the above-mentioned well-known techniques.

The analysis unit can be connected to a free end of the optical fibre, which free end preferably is available at the spool on which the optical fibre is provided.

It has to be emphasised that the optical measurements can also be performed before or during curing. Depending on the parameter(s) to be determined, such measurements can be sensible indeed. For example, if the temperature is continuously determined starting right from the deposition of the optical fibre, information is gained about the temperature in the layer into which the optical fibre is embedded when the embedding takes place as well as about rates and duration of cooling.

Said optical measurements can be performed both during the production process of the layer and the section of the workpiece, respectively, and after the production process. Measuring during the production process enables to adapt the production process and its parameters, respectively, during the production process itself, in order to optimise the quality parameters of the workpiece (section) to be produced. Accordingly, in a preferred embodiment of the apparatus according to the present invention, it is provided that a control unit is provided for controlling
- feeding and fusing of the at least one material filament,
- depositing of the at least one fused material filament, and
- feeding, depositing and embedding of the optical fibre into the layer of the fused material of the at least one material filament,
wherein the control unit is connected to the analysis unit and designed for adjusting at least
- feeding of the at least one material filament and/or
- fusing of the at least one material filament and/or
- depositing of the at least one fused material filament in dependence on the determined quality parameters, in order to optimise the quality parameters during the additive manufacturing.

Controlling of feeding and fusing of the at least one material filament and of depositing the at least one fused material filament (in order to form the layer of the fused material of the at least one material filament) is done in a known wired or wireless way, preferably by controlling corresponding motors and a heating element for adjusting the temperature of the at least one nozzle for the at least one material filament in the printing head. Controlling of feeding, depositing and thus of embedding the optical fibre can done in essentially the same way, apart from the fact that typically no heating is necessary.

The connection of the control unit to the analysis unit can be wired or wireless.

When adjusting the feeding of the at least one material filament, typically the feeding rate is adjusted and whether there should be a feeding at all at the current position of the printer head and the respective nozzle, respectively. Similarly, when adjusting the depositing of the at least one fused material filament, typically the exact position, where the at least one fused material is to be deposited, is adjusted and how much of the at least one fused material is to be deposited. When adjusting the fusing of the at least one material filament, typically the temperature of the at least one nozzle for the at least one material filament in the printing head is adjusted.

Preferably, further boundary parameters can also be adjusted by the control unit, e.g.: the ambient temperature of the printing head and the (section of the) workpiece, respectively; the temperature of a stage, where the (section of the) workpiece is arranged on; or the speed of a fan, with the fan providing for an accelerated cooling down and curing, respectively.

Since the adjustments are made in dependence on the determined quality parameters, a feedback process is established, allowing for the optimisation of the (section of the) workpiece during its production process.

Analogously to what was said above, in a method for producing at least a section of a workpiece, according to the present invention it is provided that the section of the workpiece is produced with an integrated optical fibre by additive manufacturing using an apparatus according to the present invention.

The apparatus and method according to the present invention allow for producing smart objects/workpieces which can measure and monitor their internal behaviour by themselves, by implementing an optical analysis instrument in the workpiece. Said optical analysis instrument can have the same functionality as the analysis unit described above.

The optical analysis instrument can be powered by an internal battery/accumulator. Preferably, the accumulator can be recharged contactlessly by inductive power transmission or the optical analysis instrument can be powered in this way as such. As an alternative or in addition, the optical analysis instrument can be designed for generating the needed power by energy harvesting, e.g. by using vibrations of the workpiece for generating electric power by means of piezoelectric elements.

Measurement data can be recorded and/or transmitted in a wireless manner to an external device.

Accordingly, in a preferred embodiment of the method according to the present invention, it is provided that the method comprises the following steps, in order to embed an optical analysis instrument connected to the optical fibre into the section of the workpiece:
- at a location, at which the optical analysis instrument is to be placed, depositing the at least one fused material filament and the optical fibre is stopped;
- placing the optical analysis instrument at the location;
- connecting the optical fibre to the optical analysis instrument;
- continuing the depositing of the at least one fused material filament in the region of the location.

Naturally, the (section of the) workpiece is initially designed in accordance to the fact that the optical analysis instrument is to be placed inside the (section of the) workpiece.

Then the printing process / additive manufacturing process with the apparatus according to the present invention is performed, i.e. the at least one fused material filament and the optical fibre are deposited, wherein the optical fibre is embedded into the laid down fused material of the at least one material filament.

The location, at which the optical analysis instrument is to be placed, must be at a free end of the optical fibre and the free end of the optical fibre must be created at said location, respectively. Said free end of the optical fibre can be created by cutting the optical fibre, which cutting can be done manually or automatically.

Preferably, the creation of the free end, particularly the cutting of the optical fibre, can be done right after the deposition of the at least one fused material filament and the optical fibre is stopped at the location.

It has to be emphasised that stopping the deposition of the at least one fused material filament and the optical fibre at the location does not exclude that at least the deposition of the at least one fused material filament is then continued at another location relatively far away from and outside the region of the location. This can be advantageous in cases of large workpieces to be produced, for example. In this way a part of such a workpiece can be produced while the optical analysis instrument is placed at the location and connected to the optical fibre, with said part being arranged outside the region of the location where the optical analysis instrument is to be placed. Hence, the production rate of large workpieces can be increased.

It shall be noted that also a loop configuration is imaginable, with the optical fibre forming a loop and having two free ends that are both connected to the optical analysis instrument. In this case, the location, at which the optical analysis instrument is to be placed, must be at both free ends of the optical fibre and both free ends of the optical fibre must be created at said location, respectively.

Placing of the optical analysis instrument can be done automatically or manually.

Also connecting the optical fibre to the optical analysis instrument can be done automatically or manually. Preferably, the connecting comprises the step of creating the free end of the optical fibre by cutting the optical fibre, which free end is to be connected with the optical analysis instrument in a known manner, e.g. by splicing.

By continuing the deposition of the at least one fused material filament in the region of the location the optical analysis instrument can be fully (i.e. from all sides) surrounded with the fused material of the at least one material filament. Naturally, there are situations imaginable where one wants to avoid full coverage of the optical analysis instrument, i.e. where a part of the optical analysis instrument limits the workpiece to the outside.

In a preferred embodiment of the method according to the present invention, it is provided that the method comprises the following steps, in order to embed a connector connected to the optical fibre into the section of the workpiece such that an external optical analysis instrument can be connected to the optical fibre:
- at a location, at which the connector is to be placed, depositing the at least one fused material filament and the optical fibre is stopped;
- placing the connector at the location;
- connecting the optical fibre to the connector;
- continuing the depositing of the at least one fused material filament in the region of the location.

Naturally, the (section of the) workpiece is initially designed in accordance to the fact that the connector is to be placed inside the (section of the) workpiece and that a connection from outside has to be possible, i.e. the connector has to partially limit the workpiece to the outside.

Then the printing process / additive manufacturing process with the apparatus according to the present invention is performed, i.e. the at least one fused material filament and the optical fibre are deposited, wherein the optical fibre is embedded into the laid down fused material of the at least one material filament.

The location, at which the connector is to be placed, must be at a free end of the optical fibre and a free end of the optical fibre must be created at said location, respectively. Said free end of the optical fibre can be created by cutting the optical fibre, which cutting can be done manually or automatically.

Preferably, the creation of the free end, particularly the cutting of the optical fibre, can be done right after the deposition of the at least one fused material filament and the optical fibre is stopped at the location.

It has to be emphasised that stopping the deposition of the at least one fused material filament and the optical fibre at the location does not exclude that at least the deposition of the at least one fused material filament is then continued at another location relatively far away from and outside the region of the location. This can be advantageous in cases of large workpieces to be produced, for example. In this way a part of such a workpiece can be produced while the optical analysis instrument is placed at the location and connected to the optical fibre, with said part being arranged outside the region of the location where the optical analysis instrument is to be placed. Hence, the production rate of large workpieces can be increased.

It shall be noted that also a configuration is imaginable, with the optical fibre having two free ends in the workpiece, each end being connected with a respective connector. In this case, each location, at which the respective connector is to be placed, must be at a respective free end of the optical fibre and the respective free end of the optical fibre must be created at said location, respectively. Moreover, both connectors partially limit the workpiece to the outside.

Analogously, it is imaginable to embed both the optical analysis instrument and one connector in the (section of the) workpiece, with the optical fibre connected to both the optical analysis instrument (with one free end of the optical fibre) and to the connector (with another free end of the optical fibre).

Placing of the connector can be done automatically or manually.

Also connecting the optical fibre to the connector can be done automatically or manually. Preferably, the connecting comprises the step of creating the free end of the optical fibre by cutting the optical fibre, which free end is to be connected with the connector in a known manner, e.g. by splicing.

By continuing the deposition of the at least one fused material filament in the region of the location the connector can be surrounded with the fused material of the at least one material filament such that a part of the connector limits the workpiece to the outside and an external device can be connected to the connector (and thus to the optical fibre), e.g. via a connecting fibre.

In a preferred embodiment of the method according to the present invention, it is provided that a section of the optical fibre with a free end is placed outside the section of the workpiece and a connector is connected to the free end, in order to enable a connection between the optical fibre and an external optical analysis instrument. Also in this case can an external device be connected to the optical fibre via the connector.

Placement, and if necessary the creation, of the free end of the optical fibre can be done before and/or after depositing both the at least one fused material filament and the optical fibre. In the first case initially only the optical fibre is deposited, in order to realise the free end outside the workpiece, and then at some point the at least one fused material filament is deposited at well. In the second case, initially both the at least one fused material filament and the optical fibre are deposited, and then at some point only the optical fibre is deposited, in order to form the free end outside the (section of the) workpiece.

If necessary, creating the free end of the optical fibre can be done by cutting the optical fibre.

Further deposition of the at least one fused material filament is then possible for completing the (section of the) workpiece.

### BRIEF DESCRIPTION OF FIGURES

The invention will be explained in closer detail by reference to preferred embodiments, with
- Fig. 1: schematically showing an embodiment of an apparatus according to the present invention, the apparatus being a 3D printing system comprising one material filament
- Fig. 2: schematically showing a detailed view of a printing head of the apparatus of Fig. 1, with the printing head simultaneously depositing a fused material filament and an optical fibre
- Fig. 3: schematically showing another embodiment of the apparatus according to the present invention, the apparatus being a 3D printing system comprising one material filament and one strengthening filament
- Fig. 4: schematically showing a detailed view of the printing head of the apparatus of Fig. 3, with the printing head simultaneously depositing the fused material filament, the optical fibre, and the strengthening filament
- Figs. 5a, 5b, and 5c: schematically showing workpieces produced using a method according to the present invention
- Fig. 6: schematically showing another embodiment of the apparatus according to the present invention, similar to the embodiment shown in Fig. 3, but with an analysis unit directly mounted on a spool for the optical fibre
- Fig. 7: schematically showing another embodiment of the apparatus according to the present invention, similar to the embodiment shown in Fig. 6, but with separate printing heads

### WAYS FOR CARRYING OUT THE INVENTION

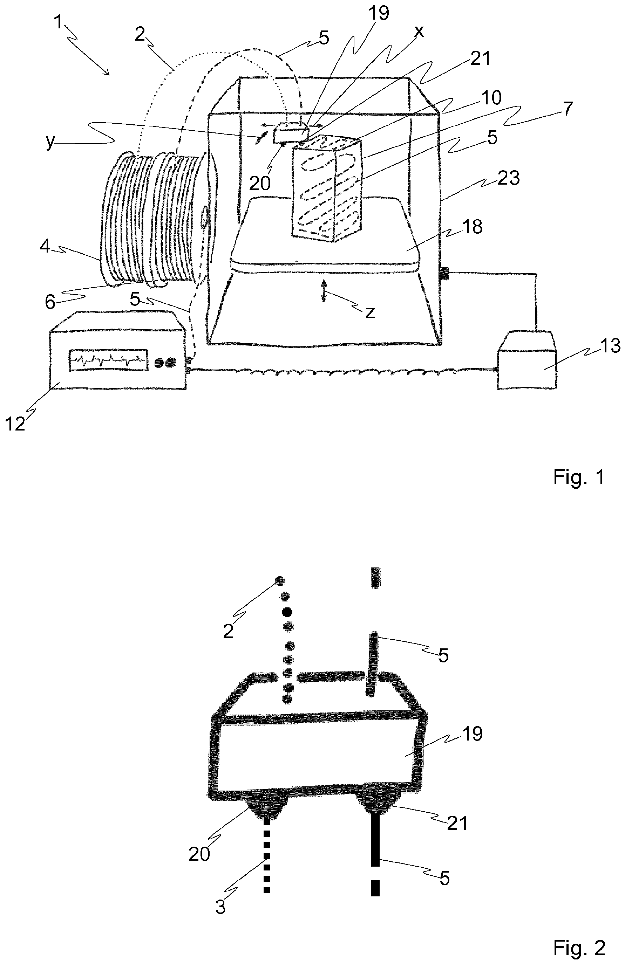

Fig. 1 shows an embodiment of an apparatus for additive manufacturing according to the present invention, the apparatus being a 3D printing system 1 comprising one material filament 2 made of plastic. By means of a spool 4, from which the material filament 2 can be unwound, the material filament 2 is fed to a nozzle 20 in a printing head 19. The nozzle 20 and the head 19, respectively, comprises a heating element (not shown), by means of which the material filament 2 is heated up and fused. The fused material of the material filament 2 and a fused material filament 3 (cf. Fig. 2), respectively, can be extruded or deposited by the nozzle 20, thereby forming a layer 10 of the fused material. In doing so, particularly in forming layers 10 upon each other, a workpiece 7 or at least a section of the workpiece 7 is built.

Thereby, the printing head 19 can be moved parallel to a first direction x and a second direction y, whereas the workpiece 7 is arranged on a stage 18 which can be moved parallel to a third direction z, with the directions x, y, z being mutually normal to each other. In the example shown in Fig. 1 directions x, y are essentially in the horizontal plane whereas the third direction z is vertical. Movement of the printing head 19 and the stage 18 is achieved in a known way, e.g. by means of electric motors (not shown). The printing head 19 and the stage 18 are supported and guided in a frame 23.

The 3D printing system 1 further comprises an optical fibre 5, which is separate from the material filament 2 and the fused material filament 3, respectively, cf. Fig. 2. By means of a spool 6, from which the optical fibre 5 can be unwound, the optical fibre 5 is fed to an, preferably unheated, nozzle 21 in the printing head 19. By means of the nozzle 21 the optical fibre 5 can be deposited and embedded into the layer 10 of the fused material of the material filament 2 in that the optical fibre 5 is deposited almost simultaneously or simultaneously with the fused material filament 3. This means that the optical fibre 5 is deposited before the material of the layer 10 becomes cured, and hence the optical fibre 5 is embedded into the layer 10.

In doing so, the workpiece 7 is produced with the optical fibre 5 being integrated, enabling the determination of quality parameters of the material inside of the workpiece 7 in a non-destructive and repeatable way.

The production process is controlled by a control unit 13 of the 3D printing system 1. Particularly, the control unit 13 controls
- feeding and fusing of the material filament 2,
- depositing of the fused material filament 3, and
- feeding, depositing and thus embedding of the optical fibre into the layer 10 of the fused material of the at least one material filament 2.

In Fig. 1 a connection between the control unit 13 and the frame 23 indicates a wired connection between the control unit 13 and the controlled elements, particularly the above-mentioned electric motors (not shown) and the above-mentioned heating element (not shown), in the shown embodiment.

Furthermore, the 3D printing system 1 comprises an analysis unit 12, which is connected to the optical fibre 5. In the example shown in Fig. 1 the analysis unit 12 is connected to a free end of the optical fibre 5, which free end projects from the spool 6. By means of the analysis unit 12 optical measurements can be performed on the optical fibre 5 for determining quality parameters of the layer 10, particularly after curing of the fused material of the material filament 2.

Since these measurements can be performed during the production process / the additive manufacturing, the production process can be continuously adapted, in order to optimise the quality parameters of the layer 10. In order to do so, the control unit 13 is connected to the analysis unit 12 and designed for adjusting at least
- feeding of the at least one material filament 2 and/or
- fusing of the at least one material filament 2 and/or
- depositing of the at least one fused material filament 3
in dependence on the determined quality parameters.

In the embodiment shown in Fig. 1 the connection between the control unit 13 and the analysis unit 12 is wired.

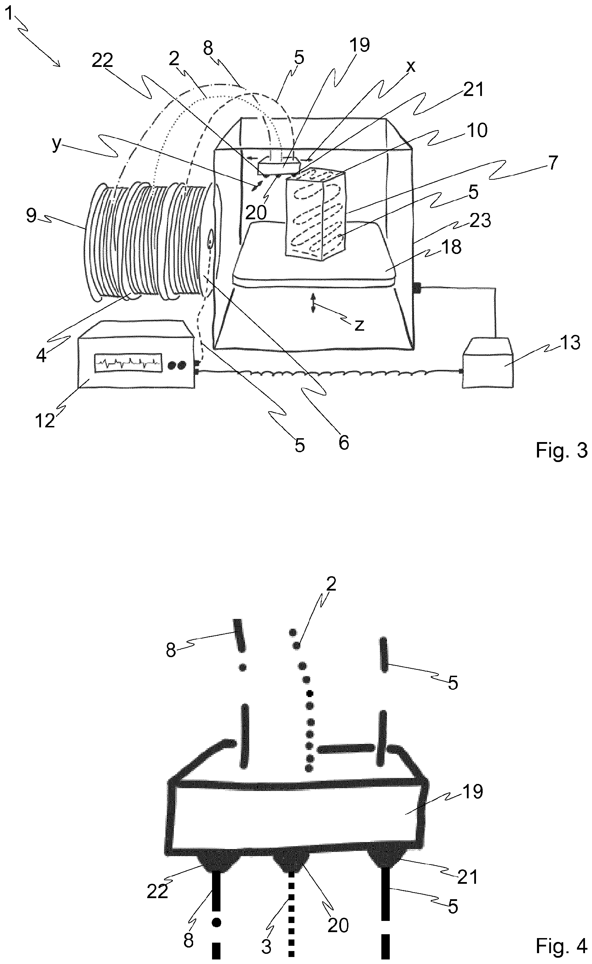

Fig. 3 shows another embodiment of an apparatus for additive manufacturing according to the present invention, the apparatus essentially being the 3D printing system 1 of the embodiment shown in Fig. 1, but comprising additionally a strengthening filament 8 which can be made of aramid fibres or carbon fibres, for example.

The strengthening filament 8 is separate from the material filament 2 and the fused material filament 3, respectively, as well as from the optical fibre 5, cf. Fig. 4. By means of a spool 9, from which the strengthening filament 8 can be unwound, the strengthening filament 8 is fed to a, preferably unheated, nozzle 22 in the printing head 19. By means of the nozzle 22 the strengthening filament 8 can be deposited and embedded into the layer 10 of the fused material of the material filament 2 in that the strengthening filament 8 is deposited almost simultaneously or simultaneously with the fused material filament 3. This means that the strengthening filament 8 is deposited before the material of the layer 10 becomes cured, and hence the strengthening filament 8 is embedded into the layer 10.

In doing so, the workpiece 7 is produced with the strengthening filament 8 being integrated, improving the mechanical properties of the workpiece 7 significantly.

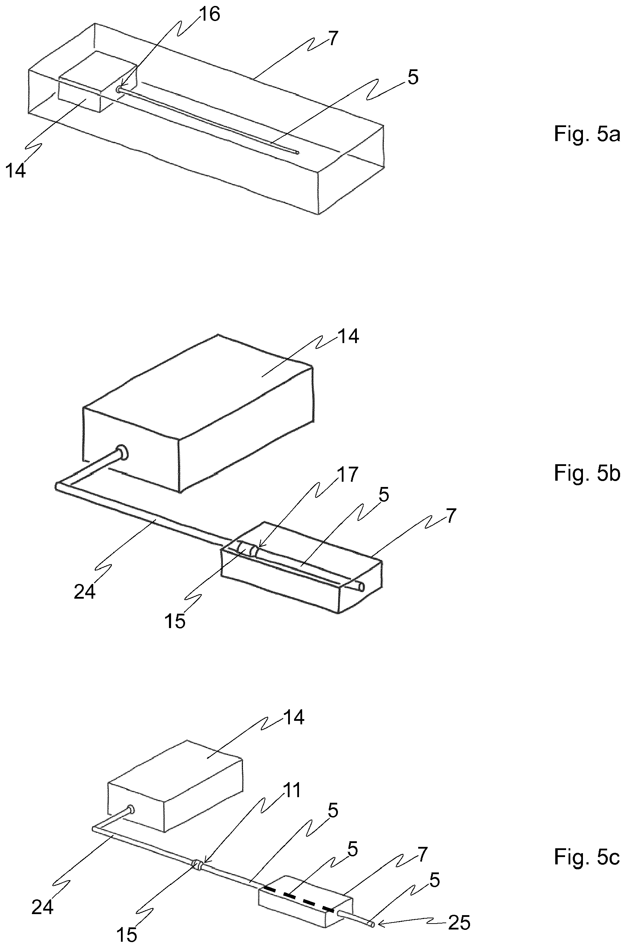

By using the apparatus according to the present invention, particularly by using one of the 3D printing systems shown in Fig. 1 and Fig. 3, in a method according to the present invention workpieces 7 as depicted in Fig. 5a, Fig. 5b, or Fig. 5c can be produced.

The workpiece 7 shown in Fig. 5a has an embedded optical analysis instrument 14 connected to the embedded optical fibre 5. Said optical analysis instrument 14 has the same functionality as the analysis unit 12 described above and renders workpiece 7 a "smart object", since the workpiece 7 itself can measure and monitor its internal behaviour by means of the optical analysis instrument 14. In example shown in Fig. 5a, the optical analysis instrument 14 is powered by an internal accumulator (not shown) which can be recharged contactlessly by inductive power transmission. Measurement data is recorded and can be transmitted by the analysis instrument 14 in a wireless manner (e.g. by WLAN) to an external device (not shown).

For producing the workpiece 7 of Fig. 5a the following steps are carried out:
- Initially, the workpiece 7 is designed in accordance to the fact that the optical analysis instrument 14 is to be placed inside the workpiece 7.
- Then the additive manufacturing process with the 3D printing system 1 is performed, i.e. the fused material filament 3 and the optical fibre 5 are deposited - and optionally also the strengthening filament 8 -, wherein the optical fibre 5 is embedded into the laid down fused material of the material filament 2.
- At a location 16, at which the optical analysis instrument 14 is to be placed, depositing the fused material filament 3 and the optical fibre 5 - and optionally the strengthening filament 8 - is stopped. The location 16 must be at a free end of the optical fibre 5 and the free end of the optical fibre 5 must be created at said location 16, respectively. Said free end of the optical fibre 5 can be created by cutting the optical fibre 5, which cutting can be done manually or automatically.
- The optical analysis instrument 14 is placed at the location 16 automatically or manually.
- The optical fibre 5 with its free end is connected to the optical analysis instrument 14 automatically or manually.
- Depositing of the fused material filament 3 is continued in the region of the location 16, wherein the optical analysis instrument 14 is fully (i.e. from all sides) surrounded with the fused material of the material filament 2.

Fig. 5b shows another workpiece 7 into which the optical fibre 5 as well as a connector 5 are integrated. The connector 5 limits the workpiece 7 at a side, such that an external optical analysis instrument 14 can be connected to the connector 5 - and thus to the optical fibre 5, in order to carry out optical measurements for determining quality parameters of the inside of the workpiece 7. In Fig. 5b, the optical analysis instrument 14 is connected to the connector 15 by means of a connecting fibre 24 in a known manner.

For producing the workpiece 7 of Fig. 5b the following steps are carried out:
- Initially, the workpiece 7 is designed in accordance to the fact that the connector 15 is to be placed inside the workpiece 7.
- Then the additive manufacturing process with the 3D printing system 1 is performed, i.e. the fused material filament 3 and the optical fibre 5 are deposited - and optionally also the strengthening filament 8 -, wherein the optical fibre 5 is embedded into the laid down fused material of the material filament 2.
- At a location 17, at which the connector 15 is to be placed, depositing the fused material filament 3 and the optical fibre 5 - and optionally the strengthening filament 8 - is stopped. The location 17 must be at a free end of the optical fibre 5 and the free end of the optical fibre 5 must be created at said location 17, respectively. Said free end of the optical fibre 5 can be created by cutting the optical fibre 5, which cutting can be done manually or automatically.
- The connector 15 is placed at the location 17 automatically or manually.
- The optical fibre 5 with its free end is connected to the connector 15 automatically or manually.
- Depositing of the fused material filament 3 is continued in the region of the location 17, wherein the connector 15 is surrounded with the fused material of the material filament 2 from all but one sides. The side of the connector 15, which remains free from the fused material of the material filament 2, limits the workpiece 7 to the outside and the connecting fibre 24 is connected to the connector 15 at this side.

Finally, Fig. 5c shows another workpiece 7 into which the optical fibre 5 is integrated (indicated as dashed line), with the optical fibre 5 having two free ends 11, 25 outside of the workpiece 7. In other words, the optical fibre 5 goes through and extends beyond the workpiece 7.

For producing the workpiece 7 of Fig. 5c those sections of the optical fibre 5 that comprise the free ends 11, 25 are placed outside the workpiece 7. In the example of Fig. 5c, placement of the section comprising free end 11 and creation of the free end 11 are done before depositing both the fused material filament 3 and the optical fibre 5. Then the fused material filament 3 is deposited as well for creating a section of the workpiece 7 with the integrated optical fibre 5. Then depositing of the fused material filament 3 is stopped and placement of the section comprising the second free end 25 and creation of the second free end 25 are done (i.e. after depositing both the fused material filament 3 and the optical fibre 5). Finally, further deposition of the fused material filament 3 is done for completing the workpiece 7.

Creating the free ends 11, 25 of the optical fibre 5 is done by cutting the optical fibre 5.

Connector 15 is connected to the free end 11 in a known manner, e.g. by splicing, in order to enable a connection between the optical fibre 5 and the external optical analysis instrument 14. In the example shown in Fig. 5c the latter connection is established by means of the connecting fibre 24. Again, with the optical analysis instrument 14 optical measurements for determining quality parameters of the inside of the workpiece 7 can be carried out.

In the 3D printing systems 1 shown in Fig. 1 and Fig. 3 the connection between the analysis unit 12 and the free end of the optical fibre 5, which free end projects from the spool 6, demands a rotatable optical coupling, since the spool 6 is rotated relative to the analysis unit 12 when the optical fibre 5 is fed from the spool 6. Such rotatable optical coupling can be relatively expensive and/or technically difficult to realise. In order to save costs, the rotatable optical coupling can be avoided by mounting the analysis unit 12 directly onto the spool 6.

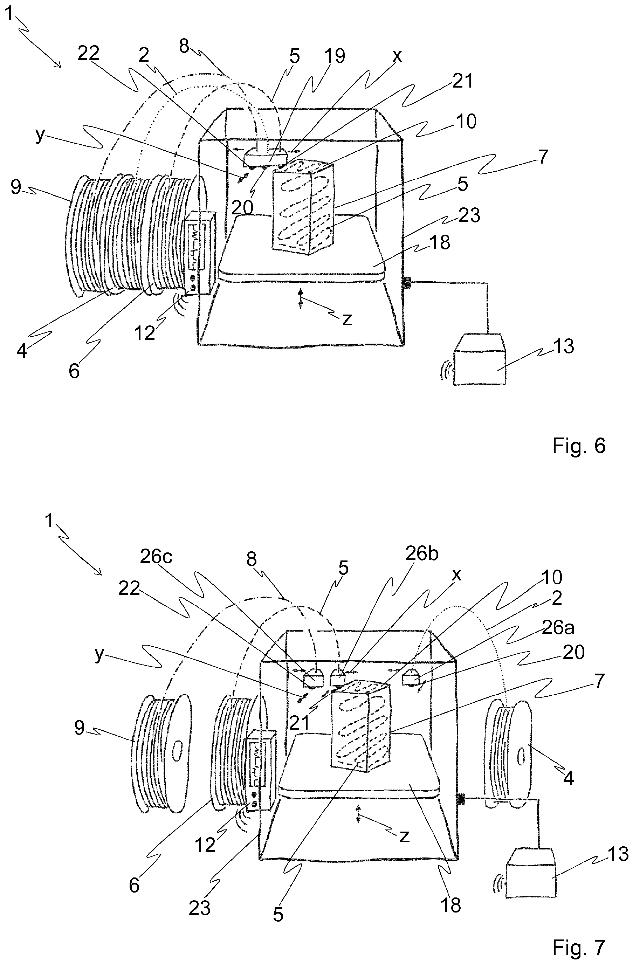

To illustrate this case, Fig. 6 shows such an embodiment of the apparatus for additive manufacturing according to the present invention, similar to the embodiment shown in Fig. 3. The analysis unit 12 rotates with the spool 6 and thus the orientation between the analysis unit 12 and the free end of the optical fibre 5 (and the spool 6, respectively) does not change, allowing for a fixed optical coupling. In this case a wireless connection between the analysis unit 12 and the control unit 13 is a convenient way to avoid a wired connection between units 12, 13 with a rotatable electric coupling. Such wireless connection is indicated in Fig. 6 by means of stylised radio waves at the analysis unit 12 and at the control unit 13.

Also in the 3D printing system 1 shown in Fig. 7 the analysis unit 12 is directly mounted onto the spool 6 and is connected to the control unit 13 in a wireless manner. In contrast to the 3D printing system 1 of Fig. 6 the 3D printing system 1 of Fig. 7 has separate printing heads 26a, 26b, 26c for the material filament 2, the optical fibre 5, and the strengthening filament 8. The printing head 26a comprises the nozzle 20 for the material filament 2, the printing head 26b comprises the nozzle 21 for the optical fibre 5, and the printing head 26c comprises the nozzle 22 for the strengthening filament 8. Fig. 7 illustrates the fact that particularly the nozzle 21 for the optical fibre 5 and the nozzle 20 for the (at least one) material filament 2 can be arranged on different printing heads 26b, 26a.

The printing heads 26a, 26b, 26c - and thus the nozzles 20, 21, 22 - can be moved and controlled independently and separately from each other, which enhances the flexibility of the 3D printing system 1. The individual movement in the first direction x and the second direction y is indicated by the corresponding arrows in Fig. 7.

Moreover, separation of the printing heads 26a, 26b, 26c facilitates an arbitrary arrangement of the spools 4, 6, 9, e.g. at different sides of the frame 23. Accordingly, in Fig.7 the spool 4 for the material filament 2 is on a (right) side opposite of the spool 6 for the optical fibre 5 and the spool 9 for the strengthening filament 8.

### List of reference signs

- 1: 3D printing system
- 2: Material filament
- 3: Fused material filament
- 4: Spool for material filament
- 5: Optical fibre
- 6: Spool for optical fibre
- 7: Workpiece
- 8: Strengthening filament
- 9: Spool for strengthening filament
- 10: Material Layer
- 11: Free end of the optical fibre
- 12: Analysis unit
- 13: Control unit
- 14: Optical analysis instrument
- 15: Connector
- 16: Location of the optical analysis instrument inside the workpiece
- 17: Location of the connector inside the workpiece
- 18: Stage
- 19: Printing head
- 20: Nozzle for the material filament
- 21: Nozzle for the optical fibre
- 22: Nozzle for the strengthening filament
- 23: Frame
- 24: Connecting fibre
- 25: Second free end of the optical fibre
- 26a, 26b, 26c: Separate printing heads
- x: First direction
- y: Second direction
- z: Third direction

## Claims

1. Apparatus (1) for additive manufacturing, comprising at least one material filament (2) and feeding means, particularly at least one spool (4), for the at least one material filament (2), wherein the apparatus (1) is designed for producing at least a section of a workpiece (7) by fusing the at least one material filament (2) and forming a layer (10) of the fused material of the at least one material filament (2) by depositing the at least one fused material filament (3), **characterised in that** an optical fibre (5) and feeding means, particularly a spool (6), for the optical fibre (5) are provided, wherein the optical fibre (5) is separate from the at least one material filament (2) and from the at least one fused material filament (3), and wherein the apparatus (1) is designed for depositing and embedding the optical fibre (5) into the layer (10) of the fused material of the at least one material filament (2).

2. Apparatus (1) according to claim 1, **characterised in that** the apparatus (1) is designed for simultaneously depositing the optical fibre (5) and the at least one fused material filament (3).

3. Apparatus (1) according to any one of claims 1 to 2, **characterised in that** at least one strengthening filament (8) and feeding means, particularly at least one spool (9), for at least one strengthening filament (8) are provided, wherein the at least one strengthening filament (8) is separate from the at least one material filament (2) and from the at least one fused material filament (3), and wherein the apparatus (1) is designed for embedding the at least one strengthening filament (8) into the layer (10) of the fused material of the at least one material filament (3).

4. Apparatus (1) according to claim 3, **characterised in that** wherein the apparatus (1) is designed for simultaneously depositing the at least one strengthening filament (8) and the at least one fused material filament (3).

5. Apparatus (1) according to any one of claims 1 to 4, **characterised in that** an analysis unit (12) is provided, which analysis unit (12) is connected to the optical fibre (5) for determining quality parameters of the layer (10), particularly after curing of the fused material of the at least one material filament (2), by means of optical measurements.

6. Apparatus (1) according to claim 5, **characterised in that** a control unit (13) is provided for controlling
- feeding and fusing of the at least one material filament (2),
- depositing of the at least one fused material filament (3), and
- feeding, depositing and embedding of the optical fibre into the layer (10) of the fused material of the at least one material filament (2),
wherein the control unit (13) is connected to the analysis unit (12) and designed for adjusting at least
- feeding of the at least one material filament (2) and/or
- fusing of the at least one material filament (2) and/or
- depositing of the at least one fused material filament (3)
in dependence on the determined quality parameters, in order to optimise the quality parameters during the additive manufacturing.

7. Method for producing at least a section of a workpiece (7), **characterised in that** the section of the workpiece (7) is produced with an integrated optical fibre (5) by additive manufacturing using an apparatus (1) according to any one of claims 1 to 6.

8. Method according to claim 7, **characterised in that** the method comprises the following steps, in order to embed an optical analysis instrument (14) connected to the optical fibre (5) into the section of the workpiece (7):
- at a location (16), at which the optical analysis instrument (14) is to be placed, depositing the at least one fused material filament (3) and the optical fibre (5) is stopped;
- placing the optical analysis instrument (14) at the location (16);
- connecting the optical fibre (5) to the optical analysis instrument (14);
- continuing the depositing of the at least one fused material filament (3) in the region of the location (16).

9. Method according to any one of claims 7 to 8, **characterised in that** the method comprises the following steps, in order to embed a connector (15) connected to the optical fibre (5) into the section of the workpiece (7) such that an external optical analysis instrument (14) can be connected to the optical fibre (5):
- at a location (17), at which the connector (15) is to be placed, depositing the at least one fused material filament (3) and the optical fibre (5) is stopped;
- placing the connector (15) at the location (17);
- connecting the optical fibre (5) to the connector (15);
- continuing the depositing of the at least one fused material filament (3) in the region of the location (17).

10. Method according to any one of claims 7 to 9, **characterised in that** a section of the optical fibre (5) with a free end (11) is placed outside the workpiece (7) and a connector (15) is connected to the free end (11), in order to enable a connection between the optical fibre (5) and an external optical analysis instrument (14).
